# EUROPEAN PATENT APPLICATION

(11) **EP 4 368 304 A1**
(43) Date of publication of application: **15.05.2024**
(21) Application number: 23208848.4
(22) Date of filing: 09.11.2023
(51) Int. Cl.: B09B 3/40, C10B 1/04, C10B 1/06, C10B 49/02, C10B 53/02

(54) **ARRANGEMENT FOR PYROLYZATION**

(30) Priority: 10.11.2022 FI 20226009
(71) Applicant: Carbon Balance Finland Oy, 90570 Oulu (FI)
(72) Inventor: Roininen, Juha, 90570 Oulu (FI)
(74) Representative: Kolster Oy Ab

(57) **Abstract**

The invention relates to an arrangement for pyrolyzation. A container (100) has at least side wall (106) that is at least partly openable. A heating equipment (306) is located inside the container. A storage structure (300, 302) is located inside the container, the storage structure comprising shelfs and partition walls, the shelfs and partition walls forming housings for buckets comprising material to be pyrolyzed. The storage structure (300, 302) is a grid like structure where a given number of rows of housings are stacked on each other, each row comprising a given number of housings. At least some of the housings have an open or openable side facing the openable side wall of the container for receiving the bucket comprising material to be pyrolyzed.

## Description

### Technical Field

The exemplary and non-limiting embodiments of the invention relate generally to pyrolyzation.

### Background

Pyrolyzation is a process where material, such as a biomass, is processed in an environment in the absence of oxygen or with low oxygen content. Typically, the end product obtained with pyrolyzation is biochar. There are two types of arrangements for realizing factory scale pyrolyzation, a continuous process and a batch-based process. One problem related to the known methods is that it is difficult to obtain large enough capacity for commercial use and that required manpower to operate the apparatuses is too large. Further, one problem related to known pyrolyzation methods is that processing sludge or slurry or other biomass comprising water is difficult.

### Brief description

According to an aspect of the present invention, there is provided an arrangement of claim 1. Some embodiments of the invention are disclosed in the dependent claims.

### Brief description of the drawings

In the following the invention will be described in greater detail by means of preferred embodiments with reference to the accompanying drawings, in which
Figures 1A and 1B illustrate examples of an arrangement for pyrolyzation;
Figure 2 illustrates a storage structure;
Figures 3A and 3B illustrate examples of an arrangement for pyrolyzation; and
Figure 4 illustrates an example of the realisation of the heating equipment.

### Detailed description of some embodiments

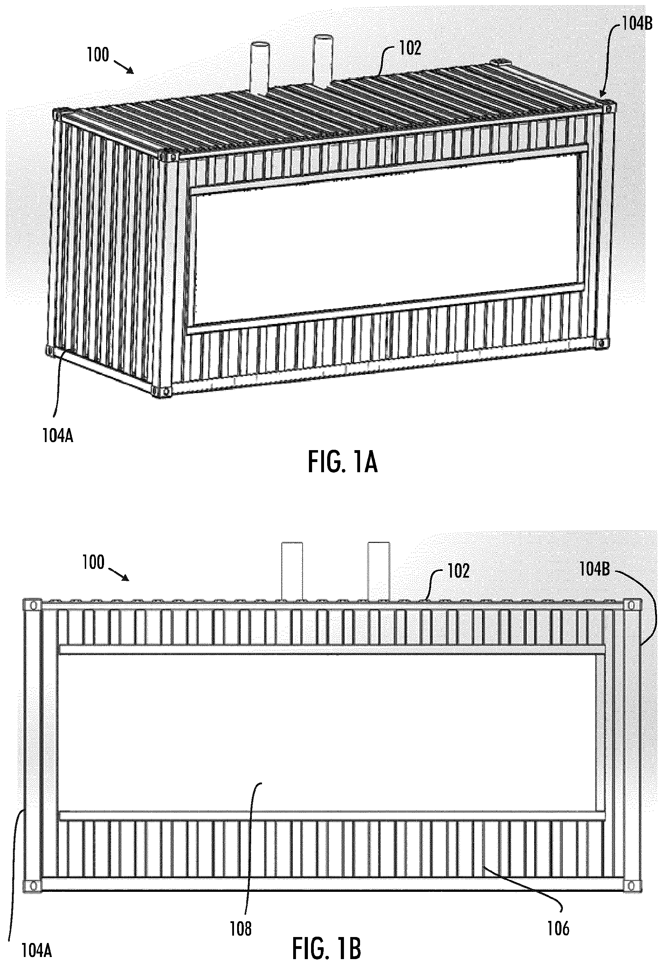

Figures 1A and 1B illustrate examples of an arrangement for pyrolyzation. The arrangement comprises a container 100. Figure 1A illustrates the front of the container viewed from an angle and Figure 1B illustrates the container viewed directly from the front side.

Typically, the container is a rectangular cuboid or a cube, but it may have any other shape as well as long it has at least one side or side wall that is at least partly openable. The example of container 100 in Figures 1A and 1B is a rectangular cuboid having sides or faces, a top 102, side walls 104A, 104B, the front wall 106 which is at least in part openable and a back wall (not shown). The front wall of the container of Figures 1A and 1B has a rectangular opening 108 through which the inside of the container may be viewed and accessed. In an embodiment, the openable side wall of the container comprises a sliding door with which the opening can be closed. In Figures 1A and 1B the sliding door is not shown for clarity. In an embodiment, the at least one side or side wall of the container that is at least partly openable may comprise more than one opening instead of the one opening 108 of Figures 1A and 1B.

Typically, the walls of the container are made of steel, but any other material that can handle considerable heat can be used. For example, concrete or stone may be used as well.

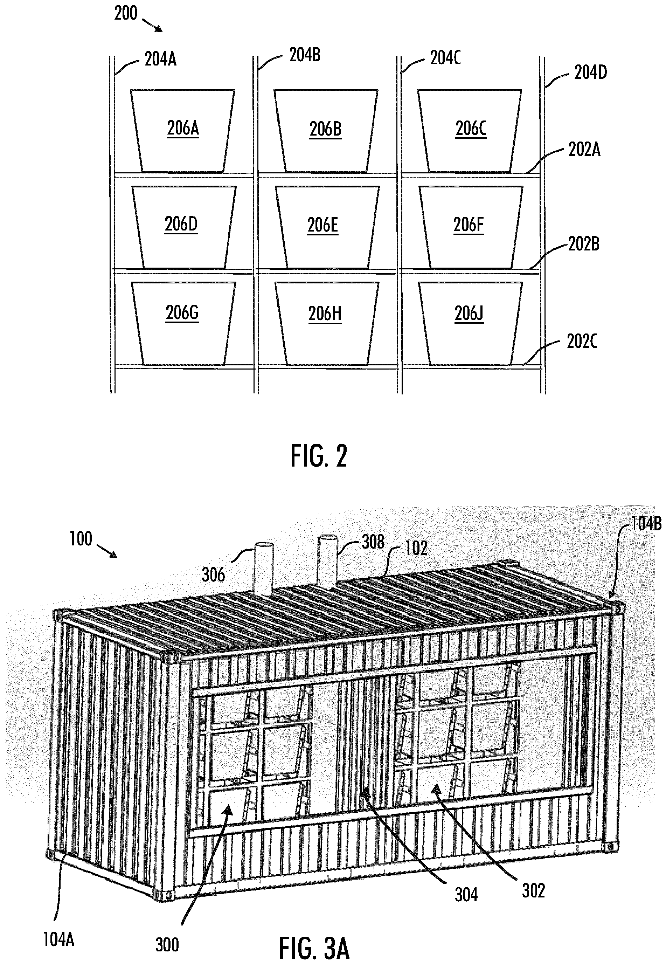

Figure 2 illustrates further a component of the arrangement for pyrolyzation.

The arrangement comprises a storage structure 200 inside the container 100, the storage structure comprising shelfs 202A, 202B, 202C and partition walls 204A, 204B, 204C, 204D. In an embodiment, the shelfs and partition walls form housings where buckets comprising material to be pyrolyzed may be placed.

In an embodiment, the storage structure 200 forms a grid like structure where a given number of rows of housings are stacked on each other, each row comprising a given number of housings. In the example of Figure 2, the grid like structure comprises three rows where each row comprises three housings, thus having a total of nine housings.

In an embodiment, at least some of the housings have an open or openable side facing the openable side wall of the container for receiving the bucket comprising material to be pyrolyzed. In an embodiment, the housings have a back wall closing the housing from the side being opposite to the openable side wall of the container.

In the example of Figure 2, each housing is displayed having a bucket 206A, 206B, 206C, 206D, 206E, 206F, 206G, 206H, 206J. Typically the buckets are made of steel and have may generally be square in cross-section. In an embodiment, the cross-section is smaller at the bottom of the bucket and larger at the top of the bucket. The cross-section may also be constant. In an embodiment, a bucket may be of the size 50 cm x 50cm x 50 cm. However, the buckets may also have some other size and shape as one skilled in the art is aware. Typically, the buckets are all of similar shape, but they may also have different shapes.

In an embodiment, the one or more of the housings of the storage structure may receive more than one bucket so that the buckets are in the housing one after another.

In an embodiment, the container may comprise more than one storage structure.

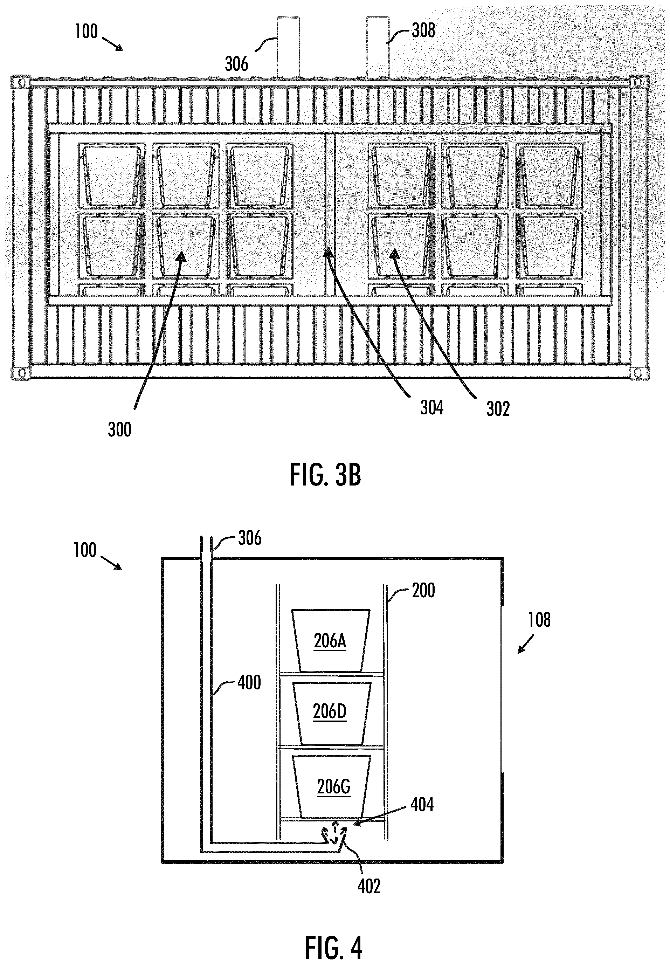

Figures 3A and 3B illustrate an example of an arrangement for pyrolyzation. Figure 3A illustrates the front of the container viewed from an angle and Figure 3B illustrates the container viewed directly from the front side.

Figures 3A and 3B illustrate an example where the container 100 has two storage structures 300, 302 installed. In an embodiment, the contained may comprise one or more walls perpendicular to at least one openable wall, dividing the container into more than one sections. In the example of Figures 3A and 3B, there is a wall 304 dividing the container into two sections. Each section comprises a storage structure.

The housings of the storage structure and the buckets in the housing are accessible through the openable wall of the container. For example, the buckets in the housings may be removed and added through the openable wall of the container. The buckets may be accessed one by one. For example, when a bucket has been in the container for a predetermined time, it may be determined that the contents of the bucket have been pyrolyzed and the bucket may be taken out and replaced with a new bucket.

As the container may contain buckets at different phases of pyrolyzation, the contents of some buckets just starting to burn, the contents of some buckets just burning and the contents of some buckets almost or completely pyrolyzed, the complete pyrolyzation process may be regarded as a continuous process. However, from a single bucket point of view the process may be regarded as a batch-based process.

In an embodiment, the container may comprise an apparatus for opening and closing the sliding door and one or more proximity sensors for controlling the opening and closing of the sliding door. The apparatus may be a motor controller by the sensors. For example, when an external transferring arm is accessing a bucket in a housing or removing a bucket from a housing, the sensors may detect the arm moving closer to the sliding door and control opening the door. When the arm moves away from the opening the sensors may control closing of the door.

In an embodiment, the container comprises a heating equipment for heating the inside of the container. Referring to Figures 3A and 3B, in an embodiment, the heating equipment comprises an inlet 306 for receiving hot substance, such as gas, and one or more outlets 306 for releasing the hot substance from the container. The hot substance or gas may be directed to the housings and especially to the buckets in the housings.

Figure 4 illustrates a simple example of the realisation of the heating equipment. The figure illustrates the container from the left side. The opening 108 on the front wall is shown on the right.

The equipment comprises an inlet 306 receiving hot gas. The received hot gas is directed via a pipe system 400 to the underside of the storage structure 200. The hot gas 404 is released from the underside of the storage structure. The released hot gas first heats the buckets on the lowest shelf of the storage structure, in the example of Figure 4 the bucket 206G. The gas further rises to upper shelfs of the storage structure to buckets 206D and 206A. As the lower buckets heat and the material inside the buckets burns, the heat from the burning rises and heats the upper buckets.

The buckets may have such structure that the material inside the buckets burn in limited oxygen atmosphere.

In an embodiment, the heating equipment may also comprise the shelfs and partition walls of the storage structure. The shelfs and partition walls may be hollow and connected to the inlet for receiving the hot gas from the inlet 306. Thus, the shelfs and partition walls may also radiate heat into the container.

The proposed container structure provides a way realise pyrolyzation in large quantities with minimum manpower. The process combines the features of continuous and batch-based processes in an efficient manner. The process enabled by the proposed container structure may be denoted as semicontinuous. Prior art semicontinuous processes have a typically a drum- or screwlike structure which requires constant human monitoring. In the proposed structure the handling of the buckets may be realised as an automated process.

Further, the proposed solution enables handling of many different kinds of materials to be pyrolyzed. The material to be pyrolyzed may have particles of different sizes.

It will be obvious to a person skilled in the art that, as the technology advances, the inventive concept can be implemented in various ways. The invention and its embodiments are not limited to the examples described above but may vary within the scope of the claims.

## Claims

1. An arrangement for pyrolyzation, comprising
a container (100) having at least side wall (106) that is at least partly openable;
heating equipment (306) inside the container for heating the inside of the container;
a storage structure (200) inside the container, the storage structure comprising shelfs (202A, 202B, 202C) and partition walls (204A, 204B, 204C), the shelfs and partition walls forming housings for buckets comprising material to be pyrolyzed;
the storage structure (200) forming a grid like structure where a given number of rows of housings are stacked on each other, each row comprising a given number of housings,
at least some of the housings having an open or openable side facing the openable side wall of the container for receiving the bucket comprising material to be pyrolyzed.

2. The arrangement of claim 1, wherein the container comprises more than one storage structures.

3. The arrangement of claim 1, wherein the heating equipment comprises an inlet for receiving hot gas and one or more outlets for releasing the hot gas from the container.

4. The arrangement of claim 1, wherein the heating equipment comprises the shelfs and partition walls connected to the inlet for radiating heat into the container.

5. The arrangement of claim 1, wherein the at least one openable side wall of the container comprises a sliding door.

6. The arrangement of claim 5, wherein the container comprises an apparatus for opening and closing the sliding door and one or more proximity sensors for controlling the opening of the sliding door when an external transferring arm is to place a bucket in a housing or remove a bucket from a housing.

7. The arrangement of claim 1, wherein the housings are rectangular in vertical or horizonal cross-section or both.

8. The arrangement of claim 1, wherein the grid like structure comprises three rows and each row comprises three housings.

9. The arrangement of claim 1, wherein the container comprises an outlet for directing hot gas out of the container.

10. The arrangement of claim 1, wherein the container comprises one or more walls perpendicular to at least one openable wall, dividing the container into more than one sections, each section comprising a storage structure.
